# EUROPEAN PATENT APPLICATION

(11) **EP 3 361 537 A1**
(43) Date of publication of application: **15.08.2018**
(21) Application number: 16853668.8
(22) Date of filing: 05.10.2016
(51) Int. Cl.: H01M 4/62, H01M 4/13, H01M 4/48

(54) **NEGATIVE ELECTRODE MATERIAL, NEGATIVE ELECTRODE, AND LITHIUM ION SECONDARY BATTERY**

(30) Priority: 05.10.2015 JP 2015198040
(71) Applicant: Sekisui Chemical Co., Ltd., Osaka-shi, Osaka 530-8565 (JP)
(72) Inventor: TERANISHI Rie, Tsukuba-shi Ibaraki 300-4292 (JP)
(74) Representative: Müller-Boré & Partner Patentanwälte PartG mbB
(86) International application number: PCT/JP2016/079704
(87) International publication number: WO 2017/061514

(57) **Abstract**

A negative electrode material includes: a negative electrode active material; a conductive auxiliary agent; and a binder. The conductive auxiliary agent includes a conductive auxiliary agent A and a conductive auxiliary agent B. The conductive auxiliary agent B is fibrous carbon having a diameter of 2 nm or more and less than 100 nm and an aspect ratio (B) represented by (length/diameter) of 30 to 10000. The conductive auxiliary agent B has a nonlinear shape different from the conductive auxiliary agent A. The conductive auxiliary agent A is fibrous carbon having a diameter of 1 nm or more and 1000 nm or less and an aspect ratio (A) represented by (length/diameter) of 1 to 10000. The conductive auxiliary agent A has a linear shape or a shape close to the linear shape. The aspect ratio (B) is larger than the aspect ratio (A). The conductive auxiliary agent A has a larger diameter than the conductive auxiliary agent B. The negative electrode active material has a particulate shape. A ratio δ represented by (average particle diameter of the negative electrode active material/length of the conductive auxiliary agent B) is 0.15 to 10.

## Description

### [Technical Field]

The present invention relates to a negative electrode material suitable for a lithium ion secondary battery, a negative electrode using the negative electrode material, and a lithium ion secondary battery including the negative electrode.

The present application claims priority based on Japanese Patent Application No. 2015-198040 filed on October 5, 2015 in Japan, the contents of which are incorporated here by reference.

### [Background Art]

Generally, a lithium ion secondary battery includes a positive electrode, a negative electrode, and an electrolyte. As the positive electrode and the negative electrode, for example, an electrode having an electrode active material layer formed by applying a composition including an electrode active material, a conductive auxiliary agent, and a binder onto a current collector is used. In the lithium ion secondary battery, the electrode active material is an important factor involved in battery capacity, and graphite, silicon, or silicon oxide is used as a negative electrode active material, for example.

The lithium ion secondary battery is required to further improve battery performance. Patent Literature 1 describes that coexistence of fibrous carbon with an active material improves battery capacity and the like of a battery.

### [Citation List]

### [Patent Literature]

[Patent Literature 1]
Japanese Unexamined Patent Application, First Publication No. 2010-238575

### [Summary of Invention]

### [Technical Problem]

The present invention has been achieved in view of the above circumstances. An object of the present invention is to provide a lithium ion secondary battery having a higher capacity development ratio and a higher capacity retention ratio than a conventional lithium ion secondary battery.

### [Solution to Problem]

[1] A negative electrode material including: a negative electrode active material; a conductive auxiliary agent; and a binder, in which the conductive auxiliary agent includes a conductive auxiliary agent A and a conductive auxiliary agent B, the conductive auxiliary agent B is fibrous carbon having a diameter of 2 nm or more and less than 100 nm and an aspect ratio (B) represented by (length/diameter) of 30 to 10000, the conductive auxiliary agent B has a nonlinear shape different from the conductive auxiliary agent A, the conductive auxiliary agent A is fibrous carbon having a diameter of 1 nm or more and 1000 nm or less and an aspect ratio (A) represented by (length/diameter) of 1 to 10000, the conductive auxiliary agent A has a linear shape or a shape close to the linear shape, the aspect ratio (B) is larger than the aspect ratio (A), the conductive auxiliary agent A has a larger diameter than the conductive auxiliary agent B, the negative electrode active material has a particulate shape, and a ratio δ represented by (average particle diameter of the negative electrode active material/length of the conductive auxiliary agent B) is 0.15 to 10.
[2] The negative electrode material according to claim 1, including: a negative electrode active material; a conductive auxiliary agent; and a binder, in which the conductive auxiliary agent includes a conductive auxiliary agent A and a conductive auxiliary agent B, the conductive auxiliary agent B is fibrous carbon having a diameter of 2 nm or more and less than 100 nm and an aspect ratio (B) represented by (length/diameter) of 30 to 10000, the conductive auxiliary agent B has a nonlinear shape different from the conductive auxiliary agent A, the conductive auxiliary agent A is fibrous carbon having a diameter of 1 nm or more and 1000 nm or less and an aspect ratio (A) represented by (length/diameter) of 10 to 10000, the conductive auxiliary agent A has a linear shape or a shape close to the linear shape, the aspect ratio (B) is larger than the aspect ratio (A), the conductive auxiliary agent A has a larger diameter than the conductive auxiliary agent B, the negative electrode active material has a particulate shape, and a ratio δ represented by (average particle diameter of the negative electrode active material/length of the conductive auxiliary agent B) is 0.6 to 10.
[3] The negative electrode material according to [1] or [2], in which a ratio β represented by (average particle diameter of the negative electrode active material/diameter of the conductive auxiliary agent B) is 10 to 2000, a ratio α represented by (average particle diameter of the negative electrode active material/diameter of the conductive auxiliary agent A) is 1 to 500, and a ratio γ represented by (average particle diameter of the negative electrode active material/length of the conductive auxiliary agent A) is 0.1 to 10.
[4] The negative electrode material according to [3], in which a ratio β represented by (average particle diameter of the negative electrode active material/diameter of the conductive auxiliary agent B) is 10 to 2000, a ratio α represented by (average particle diameter of the negative electrode active material/diameter of the conductive auxiliary agent A) is 7 to 500, and a ratio γ represented by (average particle diameter of the negative electrode active material/length of the conductive auxiliary agent A) is 0.2 to 10.
[5] The negative electrode material according to any one of [1] to [4], further including a particulate conductive auxiliary agent.
[6] The negative electrode material according to any one of [1] to [5], in which the negative electrode active material is a compound represented by a general formula SiO_{z} (in the formula, z represents any number of 0.5 to 1.5).
[7] A negative electrode including a negative electrode active material layer formed using the negative electrode material according to any one of [1] to [6] on a current collector.
[8] A negative electrode including: an active material layer including a negative electrode active material, a conductive auxiliary agent, and a binder; and a current collector, in which the conductive auxiliary agent includes a conductive auxiliary agent A and a conductive auxiliary agent B, the conductive auxiliary agent B is fibrous carbon having a diameter of 2 nm or more and less than 100 nm and an aspect ratio (B) represented by (length/diameter) of 30 to 10000, the conductive auxiliary agent B has a nonlinear shape different from the conductive auxiliary agent A, the conductive auxiliary agent A is fibrous carbon having a diameter of 1 nm or more and 1000 nm or less and an aspect ratio (A) represented by (length/diameter) of 1 to 10000, the conductive auxiliary agent A has a linear shape or a shape close to the linear shape, the aspect ratio (B) is larger than the aspect ratio (A), the conductive auxiliary agent A has a larger diameter than the conductive auxiliary agent B, the negative electrode active material has a particulate shape, and a ratio δ represented by (average particle diameter of the negative electrode active material/length of the conductive auxiliary agent B) is 0.15 to 10.
[9] The negative electrode according to [8], including: an active material layer including a negative electrode active material, a conductive auxiliary agent, and a binder; and a current collector, in which the conductive auxiliary agent includes a conductive auxiliary agent A and a conductive auxiliary agent B, the conductive auxiliary agent B is fibrous carbon having a diameter of 2 nm or more and less than 100 nm and an aspect ratio (B) represented by (length/diameter) of 30 to 10000, the conductive auxiliary agent B has a nonlinear shape different from the conductive auxiliary agent A, the conductive auxiliary agent A is fibrous carbon having a diameter of 1 nm or more and 1000 nm or less and an aspect ratio (A) represented by (length/diameter) of 10 to 10000, the conductive auxiliary agent A has a linear shape or a shape close to the linear shape, the aspect ratio (B) is larger than the aspect ratio (A), the conductive auxiliary agent A has a larger diameter than the conductive auxiliary agent B, the negative electrode active material has a particulate shape, and the ratio δ represented by (average particle diameter of the negative electrode active material/length of the conductive auxiliary agent B) is 0.6 to 10.
[10] The negative electrode according to [8] or [9], in which a ratio β represented by (average particle diameter of the negative electrode active material/diameter of the conductive auxiliary agent B) is 10 to 2000, a ratio α represented by (average particle diameter of the negative electrode active material/diameter of the conductive auxiliary agent A) is 1 to 500, and a ratio γ represented by (average particle diameter of the negative electrode active material/length of the conductive auxiliary agent A) is 0.1 to 10.
[11] The negative electrode according to [10], in which a ratio β represented by (average particle diameter of the negative electrode active material/diameter of the conductive auxiliary agent B) is 10 to 2000, a ratio α represented by (average particle diameter of the negative electrode active material/diameter of the conductive auxiliary agent A) is 7 to 500, and a ratio γ represented by (average particle diameter of the negative electrode active material/length of the conductive auxiliary agent A) is 0.2 to 10.
[12] The negative electrode according to any one of [8] to [11], in which the active material layer further includes a particulate conductive auxiliary agent.
[13] The negative electrode according to any one of [8] to [12], in which the negative electrode active material is a compound represented by a general formula SiO_{z} (in the formula, z represents any number of 0.5 to 1.5).
[14] A lithium ion secondary battery including the negative electrode according to any one of [7] to [13].

### [Advantageous Effects of Invention]

The present invention can provide a lithium ion secondary battery having a high capacity development ratio and a high capacity retention ratio.

### [Description of Embodiments]

### «Negative electrode material»

A first embodiment of a negative electrode material of the present invention is a negative electrode material including a negative electrode active material, a conductive auxiliary agent A, a conductive auxiliary agent B, and a binder.

The negative electrode active material in the present embodiment is similar to a negative electrode active material used in a conventional lithium ion secondary battery. However, in order to improve conductivity of the negative electrode material by increasing contact efficiency between the negative electrode active material, the conductive auxiliary agent A and the conductive auxiliary agent B, attention is paid to an average particle diameter indicating the size of the negative electrode active material.

An average particle diameter X of the negative electrode active material in the present embodiment satisfies all of the following (i) to (iv).
(i) A ratio β represented by the average particle diameter X of the negative electrode active material/the diameter of the conductive auxiliary agent B is 10 to 2000.
(ii) A ratio α represented by the average particle diameter X of the negative electrode active material/the diameter of the conductive auxiliary agent A is 1 to 500.
(iii) A ratio δ represented by the average particle diameter X of the negative electrode active material/the length of the conductive auxiliary agent B is 0.15 to 10.
(iv) A ratio γ represented by the average particle diameter X of the negative electrode active material/the length of the conductive auxiliary agent A is 0.1 to 10.

The conductive auxiliary agent B in the present embodiment is fibrous carbon having a diameter of 2 nm or more and less than 100 nm and an aspect ratio (B) represented by length/diameter of 30 to 10000, and the conductive auxiliary agent B has a nonlinear shape different from the conductive auxiliary agent A.

The conductive auxiliary agent A in the present embodiment is fibrous carbon having a diameter of 1 nm or more and 1000 nm or less and an aspect ratio (A) represented by length/diameter of 1 to 10000, and the conductive auxiliary agent A has a linear shape or a shape close to the linear shape.

Here, the diameter of each of the conductive auxiliary agents A and B means an average outer diameter (average fiber diameter) in a cross section orthogonal to a longitudinal direction of each of the conductive auxiliary agents.

The conductive auxiliary agent B is a carbon material contributing to conduction at a relatively long distance in the negative electrode material, and has a relatively low probability of contact with the negative electrode active material because the conductive auxiliary agent B tends to have a rigid line shape.

The conductive auxiliary member A is a carbon material contributing to conduction at a relatively short distance in the negative electrode material and has a high probability of contact with the negative electrode active material and the conductive auxiliary agent B close thereto because the conductive auxiliary agent A tends to have a shape of an agglomerated pill.

The aspect ratio (B) of the conductive auxiliary agent B is preferably larger than the aspect ratio (A) of the conductive auxiliary agent A. By the relationship of "aspect ratio (B) > aspect ratio (A)", conductivity in the negative electrode material by the conductive auxiliary agent B can be further enhanced.

The conductive auxiliary agent A preferably has a larger diameter than the conductive auxiliary agent B. By the relationship of "diameter of conductive auxiliary agent A > diameter of conductive auxiliary agent B", electric resistance of the conductive auxiliary agent B in a longitudinal direction can be reduced, and conductivity in the negative electrode material by the conductive auxiliary agent B can be further enhanced. In the relationship of "diameter of conductive auxiliary agent A > diameter of conductive auxiliary agent B", a value of the ratio of (diameter of conductive auxiliary agent A/diameter of conductive auxiliary agent B) is preferably 1.1 to 100, more preferably 1.2 to 50, and more preferably 5 to 50.

By the above relationships of the ratios regarding the diameters and the lengths of the conductive auxiliary agent A and the conductive auxiliary agent B with respect to the average particle diameter X of the negative electrode active material, conductivity of the negative electrode material can be improved, and battery performance of a secondary battery can be improved.

The ratio β is preferably 10 to 2000, more preferably 50 to 1500, and still more preferably 80 to 1000.

The ratio α is preferably 1 to 500, more preferably 5 to 500, and still more preferably 7 to 500.

In a case where the value of (diameter of conductive auxiliary agent A/diameter of conductive auxiliary agent B) is more than 2, the numerical value of the ratio α is preferably lower. For example, in a case where the value of (diameter of conductive auxiliary agent A/diameter of conductive auxiliary agent B) is 5 or more, the ratio α is preferably 1 to 180, more preferably 2 to 120, and still more preferably 4 to 80.

The ratio δ is preferably 0.15 to 10, more preferably 0.16 to 8, and still more preferably 0.18 to 3.

The ratio γ is preferably 0.1 to 10, more preferably 0.15 to 9, and still more preferably 0.18 to 8.

The ratio δ of 0.15 or more can improve conductivity between materials not in contact with each other among the active material, the conductive auxiliary agent B, a current collector, and the like. The ratio δ of 10 or less makes it easy to obtain surface smoothness of an active material layer when the active material layer is formed.

### (Negative electrode active material)

In the negative electrode material of the present embodiment, a content ratio of the negative electrode active material with respect to a total mass of the negative electrode active material, the conductive auxiliary agent A, the conductive auxiliary agent B, a particulate conductive auxiliary agent described below, and the binder is preferably 40 to 85% by mass, and more preferably 55 to 80% by mass.

When the content ratio of the negative electrode active material is 40% by mass or more, discharge capacity of a lithium ion secondary battery is further improved. When the content ratio of the negative electrode active material is 85% by mass or less, the structure of a negative electrode can be easily maintained stably.

Preferable examples of the negative electrode active material in the present embodiment include silicon oxide.

Examples of silicon oxide include a compound represented by a general formula "SiO_{z} (in the formula, z represents any number of 0.5 to 1.5)". Here, in a case where silicon oxide is viewed in a "SiO" unit, this SiO is amorphous SiO or a composite of Si and SiO_{z} in which SiO₂ is present around nanocluster Si such that a molar ratio of Si : SiO_{z} is about 1 : 1. SiO₂ is estimated to have a buffering effect on expansion and contraction of Si during charge and discharge.

Silicon oxide preferably has a particulate shape. As the size of particulate silicon oxide, for example, an average particle diameter is preferably 30 µm or less, more preferably 20 µm or less, particularly preferably 10 µm or less, and most preferably 5 µm or less.

By using silicon oxide having the above average particle diameter, an effect of use of the conductive auxiliary agents A and B in combination is remarkably obtained. Examples of a method for adjusting the average particle diameter of silicon oxide to a desired value include a method for pulverizing silicon oxide by a known method using a ball mill or the like.

Examples of a method for measuring the average particle diameter of silicon oxide include a method for measuring particle diameters of about 100 particles of any silicon oxide used for a negative electrode material using an electron microscope and calculating an average value thereof.

### (Conductive auxiliary agent A)

In the negative electrode material of the present embodiment, a content ratio of the conductive auxiliary agent A with respect to a total mass of the negative electrode active material, the conductive auxiliary agent A, the conductive auxiliary agent B, a particulate conductive auxiliary agent described later, and the binder is preferably 1 to 15% by mass, and more preferably 2 to 8% by mass.

When the content ratio of the conductive auxiliary agent A is 1% by mass or more, conductivity between the conductive auxiliary agents A and B and the negative electrode active material constituting the negative electrode material is further improved. When the content ratio of the conductive auxiliary agent A is 15% by mass or less, dispersibility of each material in the negative electrode material is enhanced, and the conductivity is further improved.

The conductive auxiliary agent A preferably has a substantially linear shape, that is, a linear shape or a shape close to the linear shape.

A lower limit of the aspect ratio (A) represented by length (average fiber length)/diameter (average fiber diameter) of the conductive auxiliary agent A is, for example, preferably 1 or more, more preferably 2 or more, still more preferably 3 or more, and further still more preferably 5 or more. An upper limit thereof is preferably 10000 or less, more preferably 5000 or less, still more preferably 1000 or less, and further still more preferably 600 or less.

When the aspect ratio (A) is 1 or more, contact efficiency between the conductive auxiliary agent A and another conductive material, the active material, or a current collector is increased, and conductivity of the negative electrode material is improved. When the aspect ratio (A) is 10000 or less, dispersibility of the conductive auxiliary agent A in the negative electrode material is enhanced, and conductivity of the negative electrode material is further improved. In addition, when an active material layer is formed, surface smoothness of the active material layer is easily obtained.

A ratio (m1/m2) between a mass m1 of the negative electrode active material and a mass m2 of the conductive auxiliary agent A included in the negative electrode material of the present embodiment is, for example, preferably 1 to 30, and more preferably 10 to 20.

When the mass ratio is 1 or more, dispersibility of the conductive auxiliary agent A in the negative electrode material is enhanced, and conductivity of the negative electrode material is further improved. When the mass ratio is 30 or less, contact efficiency between the conductive auxiliary agent A and the negative electrode active material is increased, and conductivity of the negative electrode material is further improved.

The conductive auxiliary agent A forms a bridge-like network structure in the negative electrode material and contributes to improvement in conductivity. In addition, the bridge-like network structure is estimated to contribute to stabilization of the structure of the negative electrode material.

The average fiber diameter as the diameter of the conductive auxiliary agent A is preferably 1 nm or more and 1000 nm or less, more preferably 3 nm or more and 500 nm or less, and still more preferably 7 nm or more and 250 nm or less.

When the diameter of the conductive auxiliary agent A is 1 nm or more, the conductive auxiliary agent A has rigidity to such an extent that a form as fibrous carbon can be maintained in the negative electrode material. When the diameter of the conductive auxiliary agent A is 1000 nm or less, a probability of contact with the negative electrode active material and the conductive auxiliary agent B close thereto can be further increased even if the addition amount (mass added) is small.

The average fiber length as the length of the conductive auxiliary agent A is preferably 0.1 µm to 30 µm, and more preferably 0.5 µm to 20 µm.

When the length of the conductive auxiliary agent A is 0.1 µm or more, it is easy to obtain rigidity for maintaining a length contributing to conduction at a relatively long distance. When the length of the conductive auxiliary agent A is 30 µm or less, uniformity of distribution of the active material, the conductive auxiliary agent B, and the like in the negative electrode can be enhanced.

Examples of a method for measuring the average fiber diameter of the conductive auxiliary agent A include a method for measuring fiber diameters of about 100 fibers of any conductive auxiliary agent A used for a negative electrode material using an electron microscope and calculating an average value thereof. Similarly, examples of a method for measuring the average fiber length of the conductive auxiliary agent A include a method for measuring fiber lengths of about 100 fibers of any conductive auxiliary agent A used for a negative electrode material using an electron microscope and calculating an average value thereof.

Examples of the conductive auxiliary agent A in the present embodiment include a carbon nanotube (CNT). The CNT may be a single layer or a multilayer.

The conductive auxiliary agent A may be used singly or in combination of two or more kinds thereof.

### (Conductive auxiliary agent B)

In the negative electrode material of the present embodiment, a content ratio of the conductive auxiliary agent B with respect to a total mass of the negative electrode active material, the conductive auxiliary agent A, the conductive auxiliary agent B, a particulate conductive auxiliary agent described below, and the binder is preferably 1 to 15% by mass, and more preferably 2 to 8% by mass.

When the content ratio of the conductive auxiliary agent B is 1% by mass or more, conductivity between the conductive auxiliary agents A and B and the negative electrode active material constituting the negative electrode material is further improved. When the content ratio of the conductive auxiliary agent B is 15% by mass or less, dispersibility of each material in the negative electrode material is enhanced, and the conductivity is further improved.

The conductive auxiliary agent B has a nonlinear shape different from the conductive auxiliary agent A and is preferably made of a material which tends to have a nonlinear bent structure.

The bent structure means a structure not having a substantially linear shape and means a structure with low shape regularity having a bent structure, a helical structure, or the like.

When the conductive auxiliary agent B has a higher aspect ratio, for example, the conductive auxiliary agent B tends to have a shape of a pill obtained by agglomeration of a plurality of the conductive auxiliary agents B.

When the conductive auxiliary agent B has such a shape with low regularity, it is possible to increase the number of contact points between the conductive auxiliary agent B and the active material, the conductive auxiliary agent A, or a current collector. Furthermore, by such a bent structure or a shape with low regularity of the conductive auxiliary agent B, it is possible to suppress a reduction in the number of the above contact points due to a temperature change and a volume change of the active material or the like due to charge and discharge.

The aspect ratio (B) represented by length (average fiber length)/diameter (average fiber diameter) of the conductive auxiliary agent B is, for example, preferably 30 or more, more preferably 50 or more, still more preferably 150 or more, and further still more preferably 300 or more. An upper limit thereof is preferably 10000 or less, more preferably 5000 or less, and still more preferably 1000 or less.

When the aspect ratio (B) is 30 or more, contact efficiency between the conductive auxiliary agent B and another conductive material or the active material is increased, and conductivity of the negative electrode material is improved. When the aspect ratio (B) is 10000 or less, dispersibility of the conductive auxiliary agent B in the negative electrode material is enhanced, and conductivity of the negative electrode material is further improved.

A ratio (m1/m3) between the mass m1 of the negative electrode active material and a mass m3 of the conductive auxiliary agent B included in the negative electrode material of the present embodiment is, for example, preferably 4 to 40, more preferably 5 to 30, and still more preferably 6 to 20.

When the mass ratio is 4 or more, contact efficiency between the conductive auxiliary agent B and the negative electrode active material is increased, and conductivity of the negative electrode material is further improved. When the mass ratio is 40 or less, dispersibility of the conductive auxiliary agent B in the negative electrode material is enhanced, and conductivity of the negative electrode material is further improved.

The conductive auxiliary agent B fills an inside of the bridge-like network structure formed by the conductive auxiliary agent A in the negative electrode material, and is thereby estimated to contribute to improvement of conductivity of the negative electrode material and also stabilization of the structure of the negative electrode material. Alternatively, the conductive auxiliary agent B is positioned along a surface of the conductive auxiliary agent A, the active material, and a current collector in the negative electrode material to generate an electrical contact point and is thereby estimated to contribute to improvement of conductivity of the negative electrode material.

The average fiber diameter as the diameter of the conductive auxiliary agent B is preferably 2 nm or more and less than 100 nm, more preferably 5 nm or more and 50 nm or less, and still more preferably 10 nm or more and 30 nm or less.

When the diameter of the conductive auxiliary agent B is 2 nm or more, conductivity can be maintained in accordance with a volume change of the negative electrode active material caused by charge and discharge. When the diameter of the conductive auxiliary agent B is less than 100 nm, it is possible to prevent rigidity from becoming too high and to increase flexibility for making it easy to come into contact with another conductive material constituting the negative electrode material.

The average fiber length as the length of the conductive auxiliary agent B is preferably 0.1 µm to 100 µm, and more preferably 0.2 µm to 30 µm.

When the length of the conductive auxiliary agent B is 0.1 µm or more, suitable physical properties as fibrous carbon are easily obtained. When the length of the conductive auxiliary agent B is 100 µm or less, uniformity of distribution of the active material, the conductive auxiliary agent B, and the like in the negative electrode can be enhanced, and a capacity development ratio described below can be enhanced. Furthermore, it is possible to enhance a contact property with another conductive material constituting the negative electrode material.

Examples of a method for measuring the average fiber diameter of the conductive auxiliary agent B include a method for measuring fiber diameters of about 100 fibers of any conductive auxiliary agent B used for a negative electrode material using an electron microscope and calculating an average value thereof. Similarly, examples of a method for measuring the average fiber length of the conductive auxiliary agent B include a method for measuring fiber lengths of about 100 fibers of any conductive auxiliary agent B used for a negative electrode material using an electron microscope and calculating an average value thereof.

Examples of the conductive auxiliary agent B in the present embodiment include a carbon fiber and a carbon nanotube (CNT). The CNT may be a single layer or a multilayer. The conductive auxiliary agent B may be used singly or in combination of two or more kinds thereof.

### (Particulate conductive auxiliary agent)

The negative electrode material of the present embodiment preferably includes a particulate conductive auxiliary agent not corresponding to the negative electrode active material, the conductive auxiliary agent A, or the conductive auxiliary agent B. The particulate conductive auxiliary agent can contribute to improvement in conductivity of the negative electrode material by widening a contact area between conductive materials in the negative electrode material. However, the particulate conductive auxiliary agent is not an essential component, but is added if necessary.

In the negative electrode material of the present embodiment, a content ratio of the particulate conductive auxiliary agent with respect to a total mass of the negative electrode active material, the conductive auxiliary agent A, the conductive auxiliary agent B, the particulate conductive auxiliary agent, and the binder is preferably 1 to 20% by mass, and more preferably 5 to 15% by mass.

When the content ratio of the particulate conductive auxiliary agent is 1% by mass or more, the conductive materials constituting the negative electrode material are electrically connected to each other via the particulate conductive auxiliary agent, and conductivity of the negative electrode material can be further improved. When the content ratio of the particulate conductive auxiliary agent is 20% by mass or less, it is possible to prevent a reduction in dispersion of the conductive auxiliary agents A and B necessary for conduction at a short distance or a long distance by the conductive auxiliary agents in the negative electrode material.

Preferable examples of the particulate conductive auxiliary agent in the present embodiment include: carbon black such as acetylene black or Ketjen black; graphite; and fullerene.

The particulate conductive auxiliary agent has an average particle diameter preferably of 10 to 100 nm, more preferably of 15 to 60 nm. The particulate conductive auxiliary agent preferably has a structure in which particles are connected to each other so as to be tied in a row. When the particulate conductive auxiliary agent having such an average particle diameter or structure is used, conductivity of the negative electrode material can be further improved by use of the conductive auxiliary agents A and B in combination. Adjustment and measurement of the average particle diameter of the particulate conductive auxiliary agent can be performed in a similar manner to the case of the above average particle diameter of silicon oxide.

The particulate conductive auxiliary agent may be used singly or in combination of two or more kinds thereof.

A ratio (m1/m4) of a mass m4 of the particulate conductive auxiliary agent with respect to the mass m1 of the negative electrode active material in the negative electrode material of the present embodiment is preferably 1 to 20, and more preferably 3 to 15.

Within the above range, the above effect due to inclusion of the particulate conductive auxiliary agent is more remarkably obtained.

### (Binder)

In the negative electrode material of the present embodiment, a content ratio of the binder with respect to a total mass of the negative electrode active material, the conductive auxiliary agent A, the conductive auxiliary agent B, the particulate conductive auxiliary agent, and the binder is preferably 3 to 30% by mass, and more preferably 5 to 20% by mass.

When the content ratio of the binder is 3% by mass or more, the structure of the negative electrode material is more stably maintained. When the content ratio of the binder is 30% by mass or less, discharge capacity is further improved.

The binder in the present embodiment is not particularly limited, and a binder used for a negative electrode of a conventional lithium ion secondary battery can be applied. Examples thereof include styrene butadiene rubber (SBR), polyacrylic acid (PAA), lithium polyacrylate (PAALi), polyvinylidene fluoride (PVDF), polyvinylidene fluoride-hexafluoropropylene copolymer (PVDF-HFP), polyvinyl alcohol (PVA), polyethylene oxide (PEO), polyethylene glycol (PEG), carboxymethyl cellulose (CMC), polyacrylonitrile (PAN), and polyimide (PI).

The binder may be used singly or in combination of two or more kinds thereof.

### (Other optional component)

The negative electrode material of the present embodiment may further include another optional component not corresponding to the negative electrode active material, the conductive auxiliary agent A, the conductive auxiliary agent B, the particulate conductive auxiliary agent, or the binder in addition to these materials.

Examples of an optional component include a solvent for dissolving or dispersing materials constituting the negative electrode material. The negative electrode material including a solvent as an optional component is preferably a liquid composition having fluidity at the time of use for manufacturing a negative electrode described below.

The solvent is not particularly limited, and examples thereof include water and an organic solvent.

Examples of the organic solvent include: an alcohol such as methanol, ethanol, 1-propanol, or 2-propanol; a chain or cyclic amide such as N-methylpyrrolidone (NMP) or N,N-dimethylformamide (DMF); and a ketone such as acetone.

The solvent may be used singly or in combination of two or more kinds thereof.

The blending amount of the solvent in the liquid composition is not particularly limited and is appropriately adjusted according to a purpose. For example, in a case where a negative electrode active material layer is formed by applying a negative electrode material as the liquid composition onto a base material and further drying the solvent, it is only required to adjust the blending amount of the solvent such that the liquid composition has a viscosity suitable for application. For example, blending is performed such that a content ratio of the solvent with respect to a total mass of the liquid composition is preferably 20 to 95% by mass, and more preferably 50 to 80% by mass.

In a case where a solid component other than the solvent is blended as an optional component, a content ratio of the solid component with respect to a total mass of blending components other than the solvent in the negative electrode material is preferably 10% by mass or less, and more preferably 5% by mass or less.

### (Method for manufacturing negative electrode material)

The negative electrode material of the present embodiment can be manufactured by blending the negative electrode active material, the conductive auxiliary agent A, the conductive auxiliary agent B, the particulate conductive auxiliary agent, and the binder, and an optional component if necessary.

When the negative electrode material is manufactured, components are preferably mixed sufficiently to be uniformly dispersed.

When the components are mixed, the components may be mixed while being sequentially added, or all the components may be mixed at once.

In a case of blending the solvent as an optional component, the solvent may be added alone and mixed, or the solvent may be previously mixed with any solid component and mixed simultaneously with blending of the solid component.

A method for mixing the components is not particularly limited, and examples thereof include a known mixing method using a stirring bar, a stirring blade, a ball mill, a stirrer, an ultrasonic disperser, an ultrasonic homogenizer, a rotating and revolving mixer, or the like. It is only required to set mixing conditions such as mixing temperature and mixing time appropriately according to various methods. For example, the mixing temperature can be set to 10 to 50°C, and the mixing time can be set to 3 to 40 minutes.

In a case where a solvent is contained in the negative electrode material obtained by mixing the components, the solvent can be removed by drying, evaporation, distillation, or the like to be used as a more stable negative electrode material.

### «Negative electrode»

A first embodiment of a negative electrode of the present invention is a negative electrode in which a negative electrode active material layer formed using the above negative electrode material is disposed on a current collector.

The negative electrode active material layer constituting the negative electrode of the present embodiment is preferably pre-doped with lithium.

The current collector is not particularly limited, and a current collector used in a conventional lithium ion secondary battery can be applied. Examples thereof include a current collector having conductivity, such as copper, aluminum, titanium, nickel, or stainless steel.

The current collector preferably has a sheet-like shape, and the thickness thereof can be, for example, 5 to 20 µm.

The thickness of the negative electrode active material layer is not particularly limited, and is, for example, preferably 5 to 100 µm, and more preferably 10 to 60 µm.

A method for forming the negative electrode active material layer is not particularly limited. For example, by applying a negative electrode material as a liquid composition containing the above solvent onto a current collector and further drying the solvent, a negative electrode active material layer having a desired thickness can be formed on the current collector.

Examples of a method for applying the liquid composition include: a method using various coaters such as a bar coater, a gravure coater, a comma coater, and a lip coater; a doctor blade method; and a dipping method.

A method for drying the solvent is not particularly limited and can be performed under normal pressure or reduced pressure by a known method. Drying temperature is not particularly limited and can be set to, for example, 40 to 180°C. Drying time is not particularly limited, and can be set to, for example, 12 to 48 hours.

Examples of a method for disposing the negative electrode active material layer include a method for directly forming the negative electrode active material layer on a current collector and crimping the resulting product if necessary, and a method for forming the negative electrode active material layer on another base material, then moving the resulting product onto a current collector, and crimping the resulting product on the current collector.

The negative electrode of the present embodiment is preferably pre-doped with lithium. By pre-doping, lithium reacts irreversibly with silicon dioxide in the negative electrode active material layer to generate lithium silicate (Li₄SiO₄). As a result, lithium silicate is not generated when lithium is occluded in the negative electrode in an initial charging step, and therefore a decrease in discharge capacity is suppressed.

A pre-doping method to the negative electrode is not particularly limited, and a pre-doping method applied to a conventional lithium ion secondary battery can be applied. The amount of lithium to be pre-doped is not particularly limited, and is preferably 1 to 4 molar times with respect to silicon oxide in the negative electrode active material layer, for example.

### <<Lithium ion secondary battery>>

A first embodiment of a lithium ion secondary battery of the present invention includes the above negative electrode. Therefore, both a capacity development ratio and a capacity retention ratio when charge and discharge are repeated are high, and charge and discharge characteristics are excellent.

The lithium ion secondary battery of the present embodiment may have a similar configuration to a conventional lithium ion secondary battery except that the above negative electrode is disposed, for example, may have a configuration including a negative electrode, a positive electrode, and an electrolyte. A separator may be disposed between the negative electrode and the positive electrode, if necessary.

### [Positive electrode]

A positive electrode constituting the secondary battery of the present embodiment is not particularly limited, and a known positive electrode used in a conventional lithium ion secondary battery can be applied. Examples thereof include a positive electrode including a positive electrode active material layer formed using a positive electrode material including a positive electrode active material, a binder, and a solvent, and if necessary, a conductive auxiliary agent or the like on a current collector (positive electrode current collector).

The materials such as the binder, the solvent, and the current collector constituting the positive electrode are not particularly limited, and examples thereof include similar materials to the binder, the solvent, and the current collector constituting the negative electrode.

The conductive auxiliary agent constituting the positive electrode is not particularly limited, and examples thereof include carbon black such as Ketjen black or acetylene black, graphite, a carbon nanotube (CNT), a carbon nanohorn, graphene, and fullerene.

The conductive auxiliary agent in the positive electrode may be used singly or in combination of two or more kinds thereof.

As the positive electrode active material, a known positive electrode active material used in a known lithium ion secondary battery is applied. Examples thereof include a lithium metallate compound represented by a general formula "LiMₓO_{y} (in the formula, M represents a metal, and x and y represent a composition ratio between metal M and oxygen O").

Examples of such a lithium metallate compound include lithium cobaltate (LiCoO₂), lithium nickelate (LiNiO₂), and lithium manganate (LiMn₂O₄). An olivine type lithium iron phosphate (LiFePO₄) having a similar composition can also be used.

The lithium metallate compound may have a plurality of kinds of M in the above general formula. Examples of such a lithium metallate compound include a compound represented by a general formula "LiM¹ₚM²_{q}M³ᵣO_{y} (in the formula, M¹, M², and M³ represent metals different from one another, and p, q, r, and y represent a composition ratio among metals M¹, M², and M³, and oxygen O." Here, p + q + r = x is satisfied. Specific examples thereof include LiNi_{0.33}N4n_{0.33}CO_{0.33}O₂.

The positive electrode active material may be used singly or in combination of two or more kinds thereof.

Content ratios of the positive electrode active material, the conductive auxiliary agent ,and the binder with respect to a total mass of the positive electrode material can be similar to the content ratios of the negative electrode active material, the conductive auxiliary agent, and the binder constituting the negative electrode material. A content ratio of an optional component added if necessary can also be similar to the case of the negative electrode material.

The thickness of the positive electrode active material layer is not particularly limited, and may be about 10 to 100 µm, for example.

The positive electrode active material layer can be manufactured in a similar manner to the case of the negative electrode active material layer except that the positive electrode material is used in place of the negative electrode material.

### [Electrolyte]

The electrolyte is not particularly limited, and for example, a known electrolyte, electrolytic solution, or the like used in a known lithium ion secondary battery can be applied. Examples of the electrolytic solution include a mixed solution obtained by dissolving an electrolyte salt in an organic solvent. As the organic solvent, an organic solvent having resistance to a high voltage is preferable. Examples thereof include: a polar solvent such as ethylene carbonate, propylene carbonate, dimethyl carbonate, γ-butyrolactone, sulfolane, dimethyl sulfoxide, acetonitrile, dimethylformamide, dimethylacetamide, 1,2-dimethoxyethane, 1,2-diethoxyethane, tetrohydrafuran, 2-methyltetrahydrofuran, dioxolane, or methyl acetate; and a mixture of two or more of these solvents. For example, in a case of the lithium ion secondary battery, examples of the electrolyte salt include: a lithium-containing salt such as LiClO₄, LiPF₆, LiBF₄, LiAsF₆, LiCF₆, LiCF₃CO₂, LiPF₆SO₃, LiN (SO₃CF₃)₂, Li (SO₂CF₂CF₃)₂, LiN (COCF₃)₂, or LiN (COCF₂CF₃)₂; and a mixture of two or more of these salts.

### [Separator]

A material constituting the separator is not particularly limited. Examples thereof include a porous polymer film, a nonwoven fabric, and a glass fiber. The thickness of the separator is not particularly limited as long as being able to prevent a short circuit between the positive electrode and the negative electrode, and can be, for example, 0.1 µm to 10 µm.

The form of the lithium ion secondary battery of the present embodiment is not particularly limited. Examples thereof include a cylindrical type, a rectangular type, a coin type, a sheet type, and a laminate type. A cell can be housed in a metal case, a resin case, or the like according to each form.

A method for manufacturing the lithium ion secondary battery of the present embodiment is not particularly limited, and a manufacturing method similar to that of a conventional lithium ion secondary battery can be applied in a glove box or a dry air atmosphere if necessary.

### [Examples]

Hereinafter, the present invention will be described in more detail based on specific Examples. However, the present invention is not limited to the following Examples at all.

### [Example 1]

### <Manufacture of negative electrode>

Silicon monoxide (SiO, average particle diameter: 5.0 µm, 70 parts by mass), CNT (5 parts by mass), SBR (5 parts by mass), and polyacrylic acid (10 parts by mass) were put in a reagent bottle. Distilled water was further added thereto, and the concentration thereof was adjusted. Thereafter, the resulting mixture was mixed for two minutes at 2000 rpm using a rotating and revolving mixer. Acetylene black (5 parts by mass) and SMW (5 parts by mass) were added to this mixture, and the resulting mixture was mixed for two minutes at 2000 rpm using a rotating and revolving mixer. This mixture was dispersed for 10 minutes with an ultrasonic homogenizer, and then again mixed for three minutes at 2000 rpm using a rotating and revolving mixer to obtain a negative electrode material.

The negative electrode material obtained above was applied onto both sides of a copper foil having a thickness of 15 µm with a bar coater. The resulting product was dried on a hot plate at 50°C, and then pressed with a roll pressing machine at 1 kN. A negative electrode active material layer having a thickness of 25 µm was thereby formed on the copper foil as a current collector to obtain a negative electrode precursor. Subsequently, 50 µL/cm² of an electrolytic solution described below was dropped on the negative electrode active material layer. A lithium foil having a thickness of 200 µm was overlaid on a surface of the negative electrode active material layer, and the resulting product was allowed to stand for 48 hours in this state. The negative electrode precursor was thereby pre-doped with lithium to obtain a negative electrode. After pre-doping, the lithium foil was removed from the negative electrode.

The above SMW (official name: specialty multi-walled CNT) is the above conductive auxiliary agent B, and is a multilayer carbon nanotube manufactured by Sigma-Aldrich. The number of layers thereof is 3 to 8. An average aspect ratio (B) thereof is 450. An average diameter (outer diameter) thereof is 10 nm. An average inner diameter thereof is 4.5 nm. An average length thereof is 4.5 µm. These numerical values are values measured by a transmission electron microscope (TEM).

In the negative electrode material, a ratio (β) between the average particle diameter 5.0 µm of SiO as an active material and the diameter 10 nm of SMW is 500 (5 µm/0.01 µm), and a ratio (δ) between the average particle diameter 5 µm of SiO and the length 4.5 µm of SMW is 1.1 (5.0 µm/4.5 µm).

The CNT is the conductive auxiliary agent A, and is a carbon nanotube manufactured by a CVD method. An average aspect ratio (A) thereof is 400. An average diameter (outer diameter) thereof is 12.5 nm. An average length thereof is 5 µm.

In the negative electrode material, a ratio (α) between the average particle diameter 5 µm of SiO as an active material and the diameter of CNT is 400 (5 µm/0.0125 µm), and a ratio (γ) between the average particle diameter 5 µm of SiO and the length of CNT is 1 (5 µm/5 µm).

### <Manufacture of positive electrode>

Lithium nickelate/cobaltate/manganate (Ni : Co : Mn = 1 : 1: 1, LiNMC) (93 parts by mass), polyvinylidene fluoride (PVDF) (3 parts by mass), and carbon black as a conductive auxiliary agent (4 parts by mass) were mixed to prepare a positive electrode composite material. The positive electrode composite material was dispersed in N-methylpyrrolidone (NMP) to prepare a positive electrode material (slurry). Subsequently, the positive electrode material was applied onto both sides of an aluminum foil having a thickness of 15 µm using a bar coater, and dried under reduced pressure at 100°C at 0.1 MPa for 10 hours. Thereafter, the resulting product was roll-pressed. A positive electrode active material layer having a thickness of 60 µm was thereby formed on the aluminum foil as a current collector to obtain a positive electrode.

### <Manufacture of electrolyte>

Lithium oxalate-boron trifluoride complex (LOX-BF₃) was dissolved in a mixture of ethylene carbonate (EC), diethyl carbonate (DEC), and gamma butyrolactone (GBL) (EC : DEC : GBL = 30 : 60 : 10, mass ratio) to obtain an electrolytic solution having a lithium ion concentration of 1.0 mol/kg.

### <Manufacture of lithium ion secondary battery>

Each of the negative electrode and the positive electrode obtained as described above was punched into a disc shape having a diameter of 16 mm. In addition, a separator made of a glass fiber was used, and this separator was punched into a disk shape having a diameter of 17 mm. The disk-like positive electrode, separator, and negative electrode were laminated in this order in a battery container (CR 2032) made of SUS. The separator, the negative electrode, and the positive electrode were impregnated with the electrolytic solution obtained above. Furthermore, a plate made of SUS (thickness: 1.2 mm, diameter: 16 mm) was placed on the negative electrode to cover the negative electrode. A coin cell was thereby manufactured as a lithium ion secondary battery.

### [Example 2]

A negative electrode and a lithium ion secondary battery were manufactured in a similar manner to Example 1 except that CNT having an average length of 1 µm was used.

In the negative electrode material of Example 2, an aspect ratio (A) of CNT is 80, a ratio (α) between the average particle diameter 5 µm of SiO as an active material and the diameter 12.5 nm of CNT is 400 (5 µm/0.0125 µm), and a ratio (γ) between the average particle diameter 5 µm of SiO and the length 1 µm of CNT is 5 (5 µm/1 µm).

### [Example 3]

A negative electrode material, a negative electrode, and a lithium ion secondary battery were manufactured in a similar manner to Example 1 except that VGCF (registered trademark) having an average length of about 5 µm was used in place of CNT.

VGCF (registered trademark) (official name: vapor grown carbon fiber) having an average length of about 5 µm is a vapor grown carbon fiber manufactured by Showa Denko K.K. An average aspect ratio (A) thereof is about 33. An average diameter (outer diameter) thereof is about 150 nm.

In the negative electrode material, a ratio (α) between the average particle diameter about 5 µm of SiO as an active material and the diameter of VGCF (registered trademark) is about 33 (5 µm/0.150 µm), and a ratio (γ) between the average particle diameter 5 µm of SiO and the length of VGCF (registered trademark) is 1 (5 µm/5 µm).

### [Example 4]

A negative electrode material, a negative electrode, and a lithium ion secondary battery were manufactured in a similar manner to Example 3 except that VGCF (registered trademark) having an average length of about 1 µm was used.

VGCF (registered trademark) (official name: vapor grown carbon fiber) having an average length of about 1 µm is a vapor grown carbon fiber manufactured by Showa Denko K.K. An average aspect ratio (A) thereof is about 7. An average diameter (outer diameter) thereof is about 150 nm.

In the negative electrode material, a ratio (α) between the average particle diameter about 5 µm of SiO as an active material and the diameter of VGCF (registered trademark) is about 7 (5 µm/0.150 µm), and a ratio (γ) between the average particle diameter 5 µm of SiO and the length of VGCF (registered trademark) is 5 (5 µm/1 µm).

### [Example 5]

A negative electrode material, a negative electrode, and a lithium ion secondary battery were manufactured in a similar manner to Example 3 except that silicon monoxide having an average particle diameter of about 1 µm was used.

A ratio (β) between the average particle diameter 1 µm of SiO as an active material and the diameter 10 nm of SMW is 100 (1 µm/0.01 µm), and a ratio (δ) between the average particle diameter 1 µm of SiO and the length 4.5 µm of SMW is about 0.2 (1 µm/4.5 µm).

In the negative electrode material, a ratio (α) between the average particle diameter about 1 µm of SiO as an active material and the diameter of VGCF (registered trademark) is about 7 (1 µm/0.150 µm), and a ratio (γ) between the average particle diameter 5 µm of SiO and the length of VGCF (registered trademark) is 0.2 (1 µm/5 µm).

### [Example 6]

A negative electrode material, a negative electrode, and a lithium ion secondary battery were manufactured in a similar manner to Example 3 except that Flotube (carbon nanotube manufactured by CNano Technology Limited, having an average aspect ratio (B) of 800, an average diameter (outer diameter) of 12.5 nm, and an average length of 10 µm, measured by TEM) was used in place of SMW.

In the negative electrode material of Example 6, a ratio (β) between the average particle diameter 5 µm of SiO as an active material and the diameter 12.5 nm of Flotube is 400(5 µm/0.0125 µm), and a ratio (δ) between the average particle diameter 5 µm of SiO and the length 10 µm of Flotube is 0.5 (5 µm/10 µm). An aspect ratio (B) of Flotube is 800. A ratio (α) between the average particle diameter about 5 µm of SiO as an active material and the diameter about 150 nm of VGCF (registered trademark) is about 33 (5 µm/0.150 µm). A ratio (γ) between the average particle diameter about 5 µm of SiO and the length about 5 µm of VGCF (registered trademark) is 1 (5 µm/5 µm).

### [Comparative Example 1]

A negative electrode and a lithium ion secondary battery were manufactured in a similar manner to Example 1 except that no CNT was included but SMW (10 parts by mass) was included.

### [Comparative Example 2]

A negative electrode and a lithium ion secondary battery were manufactured in a similar manner to Example 1 except that no SMW was included but CNT (10 parts by mass) was included.

### [Comparative Example 3]

A negative electrode and a lithium ion secondary battery were manufactured in a similar manner to Example 1 except that Flotube (5 parts by mass) was used in place of SMW.

The above Flotube is a carbon nanotube manufactured by CNano Technology Limited. An average aspect ratio (B) thereof is 800. An average diameter (outer diameter) thereof is 12.5 nm. An average length thereof is 10 µm. These numerical values are values measured by TEM.

In the negative electrode material, a ratio (β) between the average particle diameter 5.0 µm of SiO as an active material and the diameter 12.5 nm of Flotube is 400 (5 µm/0.0125 µm), and a ratio (δ) between the average particle diameter 5 µm of SiO and the length 10 µm of SMW is 0.5 (5 µm/10 µm).

### [Comparative Example 4]

A negative electrode material, a negative electrode, and a lithium ion secondary battery were manufactured in a similar manner to Example 6 except that silicon monoxide having an average particle diameter of about 1 µm was used.

In the negative electrode material, a ratio (β) between the average particle diameter 1 µm of SiO as an active material and the diameter 12.5 nm of Flotube is 80 (1 µm/0.0125 µm), and a ratio (δ) between the average particle diameter 1 µm of SiO and the length 10 µm of Flotube is 0.1 (1 µm/10 µm).

A ratio (α) between the average particle diameter 1 µm of SiO as an active material and the diameter 150 nm of VGCF (registered trademark) is about 7 (1 µm/0.15 µm), and a ratio (γ) between the average particle diameter 1 µm of SiO and the length 5 µm of VGCF (registered trademark) is 0.2 (1 µm/5 µm).

### <Evaluation of charge and discharge characteristics of lithium ion secondary battery>

With regard to the lithium ion secondary batteries obtained in the above Examples and Comparative Examples, constant current constant voltage charge of 0.2 C at 25°C was performed until a current value converged to 0.1 C with an upper limit voltage of 4.2 V. Thereafter, constant current discharge of 0.2 C was performed up to 2.7 V. Subsequently, the charge and discharge cycle was repeated a plurality of times at a charge and discharge current of 1 C in a similar manner to stabilize a state of each of the lithium ion secondary batteries. Subsequently, the charge and discharge cycle was repeated at a charge and discharge current of 1 C in a similar manner, and a capacity development ratio ({[discharge capacity at first cycle (mAh)]/[rated capacity (mAh)]} × 100) (%) and a capacity retention ratio at 100th cycle ({[discharge capacity at 100th cycle (mAh)]/[discharge capacity at first cycle (mAh)]} × 100) (%) were calculated. Note that the rated capacity (theoretical capacity) of each of the secondary batteries was 4 mAh. Evaluation results of the secondary batteries are written in Tables 1 and 2.

**[Table 1]**

| | Ratio (B) | Ratio (A) | Ratio β | Ratio α | Ratio δ | Ratio γ | Capacity development ratio | Capacity retention ratio |
|---|---|---|---|---|---|---|---|---|
| Example 1 | 450 | 400 | 500 | 400 | 1.1 | 1 | 98% | 93% |
| Example 2 | 450 | 80 | 500 | 400 | 1.1 | 5 | 95% | 90% |
| Comparative Example 1 | 450 | - | 500 | - | 1.1 | - | 97% | 83% |
| Comparative Example 2 | - | 400 | - | 400 | - | 5 | 95% | 69% |
| Comparative Example 3 | 800 | 400 | 400 | 400 | 0.5 | 1 | 83% | 45% |

**[Table 2]**

| | Ratio (B) | Ratio (A) | Ratio β | Ratio α | Ratio δ | Ratio γ | Capacity development ratio | Capacity retention ratio |
|---|---|---|---|---|---|---|---|---|
| Example 3 | 450 | 33 | 500 | 33 | 1.1 | 1 | 93% | 93% |
| Example 4 | 450 | 7 | 500 | 33 | 1.1 | 5 | 92% | 90% |
| Example 5 | 450 | 33 | 100 | 7 | 0.2 | 0.2 | 97% | 94% |
| Example 6 | 800 | 33 | 400 | 33 | 0.5 | 1 | 92% | 88% |
| Comparative Example 4 | 800 | 33 | 80 | 7 | 0.1 | 0.2 | 90% | 57% |

The configurations, combinations thereof, and the like in the embodiments described above are merely examples, and addition of a known configuration, omission, substitution, and another modification are possible within a range not departing from the gist of the present invention. Furthermore, the present invention is not limited by the embodiments.

## Claims

1. A negative electrode material comprising: a negative electrode active material; a conductive auxiliary agent; and a binder, wherein
the conductive auxiliary agent includes a conductive auxiliary agent A and a conductive auxiliary agent B,
the conductive auxiliary agent B is fibrous carbon having a diameter of 2 nm or more and less than 100 nm and an aspect ratio (B) represented by (length/diameter) of 30 to 10000, and the conductive auxiliary agent B has a nonlinear shape different from the conductive auxiliary agent A,
the conductive auxiliary agent A is fibrous carbon having a diameter of 1 nm or more and 1000 nm or less and an aspect ratio (A) represented by (length/diameter) of 1 to 10000, and the conductive auxiliary agent A has a linear shape or a shape close to the linear shape,
the aspect ratio (B) is larger than the aspect ratio (A),
the conductive auxiliary agent A has a larger diameter than the conductive auxiliary agent B, and
the negative electrode active material has a particulate shape, and a ratio δ represented by (average particle diameter of the negative electrode active material/length of the conductive auxiliary agent B) is 0.15 to 10.

2. The negative electrode material according to claim 1, comprising: a negative electrode active material; a conductive auxiliary agent; and a binder, wherein
the conductive auxiliary agent includes a conductive auxiliary agent A and a conductive auxiliary agent B,
the conductive auxiliary agent B is fibrous carbon having a diameter of 2 nm or more and less than 100 nm and an aspect ratio (B) represented by (length/diameter) of 30 to 10000, and the conductive auxiliary agent B has a nonlinear shape different from the conductive auxiliary agent A,
the conductive auxiliary agent A is fibrous carbon having a diameter of 1 nm or more and 1000 nm or less and an aspect ratio (A) represented by (length/diameter) of 10 to 10000, and the conductive auxiliary agent A has a linear shape or a shape close to the linear shape,
the aspect ratio (B) is larger than the aspect ratio (A),
the conductive auxiliary agent A has a larger diameter than the conductive auxiliary agent B, and
the negative electrode active material has a particulate shape, and a ratio δ represented by (average particle diameter of the negative electrode active material/length of the conductive auxiliary agent B) is 0.6 to 10.

3. The negative electrode material according to claim 1 or 2, wherein
a ratio β represented by (average particle diameter of the negative electrode active material/diameter of the conductive auxiliary agent B) is 10 to 2000,
a ratio α represented by (average particle diameter of the negative electrode active material/diameter of the conductive auxiliary agent A) is 1 to 500, and
a ratio γ represented by (average particle diameter of the negative electrode active material/length of the conductive auxiliary agent A) is 0.1 to 10.

4. The negative electrode material according to claim 3, wherein
a ratio β represented by (average particle diameter of the negative electrode active material/diameter of the conductive auxiliary agent B) is 10 to 2000,
a ratio α represented by (average particle diameter of the negative electrode active material/diameter of the conductive auxiliary agent A) is 7 to 500, and
a ratio γ represented by (average particle diameter of the negative electrode active material/length of the conductive auxiliary agent A) is 0.2 to 10.

5. The negative electrode material according to any one of claims 1 to 4, further comprising a particulate conductive auxiliary agent.

6. The negative electrode material according to any one of claims 1 to 5, wherein the negative electrode active material is a compound represented by a general formula SiO_{z} (in the formula, z represents any number of 0.5 to 1.5).

7. A negative electrode comprising a negative electrode active material layer formed using the negative electrode material according to any one of claims 1 to 6 on a current collector.

8. A negative electrode comprising: an active material layer including a negative electrode active material, a conductive auxiliary agent, and a binder; and a current collector, wherein
the conductive auxiliary agent includes a conductive auxiliary agent A and a conductive auxiliary agent B,
the conductive auxiliary agent B is fibrous carbon having a diameter of 2 nm or more and less than 100 nm and an aspect ratio (B) represented by (length/diameter) of 30 to 10000, and the conductive auxiliary agent B has a nonlinear shape different from the conductive auxiliary agent A,
the conductive auxiliary agent A is fibrous carbon having a diameter of 1 nm or more and 1000 nm or less and an aspect ratio (A) represented by (length/diameter) of 1 to 10000, and the conductive auxiliary agent A has a linear shape or a shape close to the linear shape,
the aspect ratio (B) is larger than the aspect ratio (A),
the conductive auxiliary agent A has a larger diameter than the conductive auxiliary agent B, and
the negative electrode active material has a particulate shape, and a ratio δ represented by (average particle diameter of the negative electrode active material/length of the conductive auxiliary agent B) is 0.15 to 10.

9. The negative electrode according to claim 8, comprising: an active material layer including a negative electrode active material, a conductive auxiliary agent, and a binder; and a current collector, wherein
the conductive auxiliary agent includes a conductive auxiliary agent A and a conductive auxiliary agent B,
the conductive auxiliary agent B is fibrous carbon having a diameter of 2 nm or more and less than 100 nm and an aspect ratio (B) represented by (length/diameter) of 30 to 10000, and the conductive auxiliary agent B has a nonlinear shape different from the conductive auxiliary agent A,
the conductive auxiliary agent A is fibrous carbon having a diameter of 1 nm or more and 1000 nm or less and an aspect ratio (A) represented by (length/diameter) of 10 to 10000, and the conductive auxiliary agent A has a linear shape or a shape close to the linear shape,
the aspect ratio (B) is larger than the aspect ratio (A),
the conductive auxiliary agent A has a larger diameter than the conductive auxiliary agent B, and
the negative electrode active material has a particulate shape, and a ratio δ represented by (average particle diameter of the negative electrode active material/length of the conductive auxiliary agent B) is 0.6 to 10.

10. The negative electrode according to claim 8 or 9, wherein
a ratio β represented by (average particle diameter of the negative electrode active material/diameter of the conductive auxiliary agent B) is 10 to 2000,
a ratio α represented by (average particle diameter of the negative electrode active material/diameter of the conductive auxiliary agent A) is 1 to 500, and
a ratio γ represented by (average particle diameter of the negative electrode active material/length of the conductive auxiliary agent A) is 0.1 to 10.

11. The negative electrode according to claim 10, wherein
a ratio β represented by (average particle diameter of the negative electrode active material/diameter of the conductive auxiliary agent B) is 10 to 2000,
a ratio α represented by (average particle diameter of the negative electrode active material/diameter of the conductive auxiliary agent A) is 7 to 500, and
a ratio γ represented by (average particle diameter of the negative electrode active material/length of the conductive auxiliary agent A) is 0.2 to 10.

12. The negative electrode according to any one of claims 8 to 11, wherein the active material layer further includes a particulate conductive auxiliary agent.

13. The negative electrode according to any one of claims 8 to 12, wherein the negative electrode active material is a compound represented by a general formula SiO_{z} (in the formula, z represents any number of 0.5 to 1.5).

14. A lithium ion secondary battery comprising the negative electrode according to any one of claims 7 to 13.
